Europäisches Patentamt

European Patent Office

Office européen des brevets

(11) Numéro de publication : **0 108 692**
**B1**

# FASCICULE DE BREVET EUROPÉEN

(45) Date de publication du fascicule du brevet :
**01.10.86**

(51) Int. Cl.⁴ : **H 04 L 11/16**

(21) Numéro de dépôt : **83402139.6**

(22) Date de dépôt : **03.11.83**

(54) **Procédé et installation de transmission de données numériques.**

(30) Priorité : **03.11.82 FR 8218425**

(43) Date de publication de la demande :
**16.05.84 Bulletin 84/20**

(45) Mention de la délivrance du brevet :
**01.10.86 Bulletin 86/40**

(84) Etats contractants désignés :
**BE DE GB IT SE**

(56) Documents cités :
**FR-A- 2 254 253**
**US-A- 3 601 543**

(73) Titulaire : **ELECTRICITE DE FRANCE Service National**
**2, rue Louis Murat**
**F-75008 Paris (FR)**

(72) Inventeur : **Hamelin, Jean-François**
**43, Avenue du Maréchal Joffre**
**F-78400 Chatou (FR)**
Inventeur : **Combe, Michel**
**4, Avenue Alsace Lorraine**
**F-92500 Rueil-Malmaison (FR)**

(74) Mandataire : **Fort, Jacques et al**
**CABINET PLASSERAUD 84, rue d'Amsterdam**
**F-75009 Paris (FR)**

Jouve, 18, rue St-Denis, 75001 Paris, France

## Description

L'invention concerne la transmission de données numériques sur un réseau comportant une ligne de transmission de données et une ligne de commande et de synchronisation reliant une station maître seule capable d'émettre sur la ligne de commande et plusieurs stations esclaves.

Elle trouve une application importante, bien que non exclusive, constituée par des systèmes d'acquisition de données dans lesquels les stations esclaves comportent un concentrateur des données provenant de capteurs associés à la station, ainsi que des moyens de numérisation si certains au moins de ces capteurs sont de type analogique.

On connaît déjà de nombreux réseaux de transmission informatiques permettant la transmission de données, organisés soit en ligne bus (c'est-à-dire non bouclée), soit en anneau bouclé. Parmi les premiers, on peut citer le réseau maître-esclave Hi Net, à bus et transmission sur paire torsadée. Parmi les seconds, on peut citer le réseau à passage de jeton « Prime Net », à topologie en anneau et transmission en bande de base sur câble coaxial.

La transmission sur ces réseaux est généralement asynchrone. Mais l'absence de relation de phase entre les stations oblige à faire précéder chaque transmission d'information utile d'un échange de données de synchronisation qui réduit considérablement le débit du réseau. Dans le cas fréquent où on cherche à atteindre des rythmes de transfert élevés, une transmission synchrone est beaucoup plus avantageuse. Mais elle exige de disposer à la réception de signaux d'horloge synchronisés avec ceux de l'émission. Une solution fréquemment utilisée consiste à extraire le signal d'horloge du train de données numériques reçu et de l'utiliser pour le décodage : mais cette technique implique généralement le recours à des dispositifs du type boucle à verrouillage de phase qui nécessitent une séquence de synchronisation précédant chaque message sur laquelle le verrouillage puisse s'opérer.

La longueur de cette séquence de synchronisation croît avec la fréquence de transmission et peut devenir importante par rapport à la taille du plus petit message transmis. Une autre solution consiste à transmettre le signal d'horloge ayant servi à l'émission du message sur une voie séparée, afin de permettre un décodage immédiat. Cette technique demande l'utilisation d'une voie supplémentaire à laquelle toutes les stations aient accès en émission et en réception.

On connaît par ailleurs (FR-A-2 254 253) un système de transmission de données numériques comportant à la fois une ligne de transmission et une ligne de commande. Mais il n'y a pas continuité d'émission sur la ligne de commande, sous une forme permettant une extraction permanente du signal d'horloge par les stations esclaves et, donc, suppression absolue du risque de perte de synchronisation. Plus précisément, le document FR-A-2 254 253 décrit un réseau dont les « pupitres », c'est-à-dire les stations esclaves susceptibles d'émettre, doivent être disposés en ordre hiérarchique dans la boucle (page 5, lignes 18 à 21) et la communication avec des « chambres » s'effectue en séquence, par comptage des impulsions d'horloge. La ligne de synchronisation n'est parcourue que par des salves de signal d'horloge séparées par des coupures. On connaît également (US-A-3 601 543) un réseau avec affectation de tranches de temps aux différentes stations. Les signaux de données sont formés par modulation des signaux de synchronisation à l'aide d'un coupleur. Il n'y a émission, sur la ligne de synchronisation, que de trames successives de synchronisation précédées chacune d'un signal de départ.

L'invention vise à assurer une transmission synchrone de données numériques sur réseau répondant mieux que celles antérieurement effectuées aux exigences de la pratique, notamment en assurant en permanence le synchronisme des horloges de toutes les stations de façon simple.

Dans ce but, l'invention propose notamment un procédé de transmission de données numériques sur un réseau comportant une ligne de transmission de données et une ligne de commande et de synchronisation reliant une station maître, seule capable d'émettre sur la ligne de commande, et plusieurs stations esclaves, caractérisé en ce qu'on fait circuler les informations en phase sur les deux lignes présentant la même configuration, on maintient en permanence l'émission de la station maître sur la ligne de commande en envoyant sur la ligne de commande, un caractère d'élaboration des signaux de synchronisation entre les informations de commande et, à chaque station esclave, on extrait en permanence le signal d'horloge des informations circulant sur la ligne de commande.

Dans la réalisation de loin la plus avantageuse, les lignes sont unidirectionnelles et constituent deux boucles parallèles se refermant sur la station maître.

Le code utilisé sur la ligne de commande est choisi parmi ceux permettant de reconstituer l'horloge à partir du message codé (code MANCHESTER par exemple). L'extraction d'horloge est facilitée par le caractère continu de l'émission de caractères sur la ligne de commande, qui peut être assurée par un dispositif simple placé à la station maître. On s'affranchit ainsi du délai séparant deux émissions successives de la station maître sur la ligne de commande et on évite toute séquence de synchronisation précédant les messages émis sur cette ligne.

L'invention propose également une installation de transmission de données numériques sur un réseau comportant une ligne de transmission de données et une ligne de commande et de synchronisation reliant une station maître seule capable d'émettre sur la ligne de commande et plusieurs stations esclaves, caractérisée en ce que les deux lignes sont unidirectionnelles et bouclées sur la station maître et en ce que les stations émettent les informations en phase sur les deux lignes, chaque station esclave comportant des moyens pour extraire une information d'horloge du signal sur la ligne de commande.

L'horloge étant à chaque station esclave extraite des informations circulant sur la ligne de commande, qui sont en phase avec les données circulant sur la ligne de données, on peut décoder, émettre et, éventuellement, répéter les informations circulant sur la ligne de données de manière très simple ; on élimine ainsi la nécessité de tout dispositif de synchronisation sur la ligne de données et de tout motif de synchronisation sur les données transmises. Du fait du caractère monodirectionnel sur les deux lignes, sous le contrôle d'une horloge unique, les données circulent dans le même sens et avec les mêmes temps de parcours sur les deux lignes de transmission, ce qui maintient les horloges en phase avec les trains binaires reçus.

Le support physique de transmission et le mode de modulation peuvent être quelconques, à condition d'être compatibles avec la bande passante nécessaire. Si le support est non diffusant, il peut y avoir continuité physique du milieu de transmission depuis l'accès d'émission de la station maître jusqu'à l'accès de réception de cette même station, sur les deux lignes de transmission. Si, au contraire, le support physique de transmission constituant la ligne de données est diffusant, il doit être interrompu en chaque station et chaque station esclave joue, entre autres, le rôle de répéteur pour les informations transitant sur la ligne de données.

L'invention sera mieux comprise à la lecture de la description qui suit de modes particuliers d'exécution de l'invention, donnés à titre d'exemples non limitatifs. La description se réfère aux dessins qui l'accompagnent, dans lesquels :

la Figure 1 est un schéma de principe d'un système décentralisé d'acquisition de données de mesure mettant en œuvre l'invention ;

les Figures 2 et 3 sont des schémas synoptiques montrant deux modes de réalisation possibles des moyens de synchronisation utilisables dans les stations esclaves du système de la figure 1,

la Figure 4 est un schéma synoptique de principe montrant des moyens de synchronisation utilisables dans la station maître du système de la figure 1.

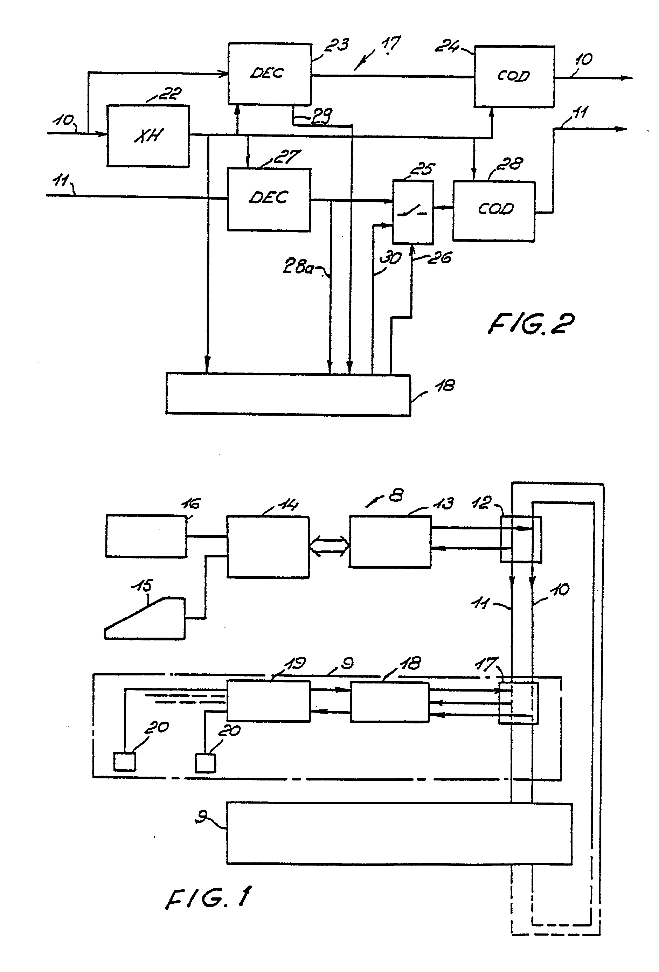

Le système d'acquisition montré en Figure 1 comporte une station maître 8 et plusieurs stations esclaves 9 reliées par une ligne de commande 10 et une ligne de données (ou ligne de réponse) 11, l'une et l'autre monodirectionnelles et en anneau fermé sur la station maître. La station maître 8 peut être regardée comme comportant un coupleur 12 d'interface entre les lignes d'une part, un ensemble constitué d'une unité de commande UC 13, d'un calculateur 14 et d'organes d'entrée-sortie d'autre part. Sur la Figure 1, les organes d'entrée-sortie sont schématisés sous forme d'une console d'opérateur 15 et d'un appareil d'enregistrement et/ou de visualisation 16, d'autres organes pouvant évidemment être prévus.

Chacune des stations esclaves 9 peut de son côté être regardée comme comportant un coupleur 17, un concentrateur 18 et une centrale de mesure 19 associée à des capteurs analogiques et/ou numériques 20. Les éléments 18, 19 et 20 peuvent être de constitution classique. Le concentrateur 18 assure les fonctions habituelles de gestion des communications avec sa centrale de mesure 19, de mise en forme des données provenant de la centrale de mesure, de mémorisation des données dans des mémoires tampon, de commande d'émission, etc.

Le coupleur 17 aura une constitution différente suivant que les supports de transmission sont diffusants ou non diffusants.

Dans le premier cas, qui est par exemple celui d'un câble coaxial ou d'une paire torsadée, le milieu physique de transmission doit être interrompu à chaque coupleur afin d'assurer le caractère monodirectionnel de la transmission. Le coupleur 17 montré schématiquement en Figure 2, qui remplit cette condition, comporte un circuit XH 22 d'extraction de signal d'horloge 22 qui reçoit les données provenant en continu de la station maître 8 par la ligne de commande 10. Ce circuit 22 est, par exemple, un dispositif dérivateur attaquant une boucle à verrouillage de phase si les informations circulant sur la ligne 10 sont codées en code Manchester. Un décodeur 23 attaqué par la ligne de commande 10 est piloté par le signal d'horloge fourni par le circuit XH 22. Le décodeur 23 envoie au concentrateur 18, par la ligne 29, les informations décodées circulant sur la ligne 10, c'est-à-dire les commandes émises par la station maître 8, séparées par une succession de caractères ou de chaînes de caractères identiques émis en continu pour faciliter l'élaboration des signaux de synchronisation (horloges locales) par les circuits XH 22 des différentes stations esclaves. Le circuit XH 2 pilote également le décodeur 27 qui reçoit, puis délivre au concentrateur 18, par la ligne 28a, les données émises par les autres stations esclaves 9 du système sur la ligne 11.

On voit qu'aucune extraction d'horloge ou aucune autre forme de synchronisation n'est effectuée sur la ligne de données 11, les données reçues sur cette ligne 11 étant, de par le principe même de l'invention, en phase avec les signaux d'horloge élaborés par le circuit XH 22.

Un codeur 24 reçoit les signaux décodés reçus du décodeur 23, les recode et les ré-émet sur la ligne 10 vers la station esclave suivante. Le codeur 28 remplit la même fonction pour les informations arrivant sur la ligne 11, lorsque son entrée est reliée par un commutateur 25 à la sortie du décodeur 27.

Le commutateur 25 comporte une entrée qui reçoit les informations décodées circulant sur la ligne 11, fournies par le décodeur 27, et une entrée qui reçoit les informations locales en provenance, par 30, du concentrateur 18. En situation d'attente, le commutateur 25 laisse passer, vers le codeur 28, les informations circulant sur la ligne 11, de sorte que le coupleur 17 est alors transparent aux signaux de données. Lorsque le commutateur 25 reçoit au contraire, sur une entrée de commande 26, un signal indiquant que la station esclave correspondante est autorisée à transmettre, et lorsque cette station a un message à transmettre, ce commutateur 25 laisse passer les informations provenant du concentrateur 18 par la ligne 30. La station esclave peut alors émettre sur la ligne de données 11 vers la station maître.

Les deux codeurs 24 et 28 étant pilotés par la même horloge 22, les données ré-émises sont parfaitement en phase. Afin que ces données ré-émises arrivent également en phase sur la station suivante du réseau, il faut que la différence entre les temps de propagation des signaux sur les deux lignes jusqu'à cette prochaine station soient inférieurs à une fraction, typiquement à un quart, de la durée du plus court des états stables d'un élément binaire (bit) d'information. Après décodage, cette contrainte est aisément respectée pour des distances de quelques centaines de mètres et un débit atteignant 10 Mbit/s, si les lignes 10 et 11 sont deux des lignes d'un câble multiligne commun. La différence de longueur maximum à respecter est de l'ordre de 2 m.

Le signal d'horloge provenant du circuit XH 22 étant également fourni au concentrateur 18, on peut synchroniser le fonctionnement de ce dernier avec celui des autres stations du réseau. En effet, on peut fabriquer facilement, à partir du signal d'horloge fourni, des signaux à fréquence multiple ou sous-multiple, directement exploitables par les concentrateurs 18.

Naturellement, on pourrait aussi bien considérer que certains des composants du codeur qui vient d'être décrit appartiennent au concentrateur 18.

On voit que, dans le cas illustré en figure 2, chaque station esclave 9 joue le rôle de répéteur. Sur les deux lignes 10 et 11, les informations seront décodées, puis codées à nouveau sous le contrôle de l'horloge locale 22 et donc remises en forme. Cette configuration en répéteur est impérative si le support de transmission est diffusant, pour que l'information se propage dans un seul sens sur la ligne 11, qui peut recevoir des informations de plusieurs stations. Sur la ligne 10, l'information se propage naturellement dans un seul sens à partir de la station maître 8 et il suffit d'éviter qu'elle ne retraverse le coupleur 12 après avoir parcouru l'anneau.

Dans le cas où on utilise un support de transmission non diffusant pour constituer la ligne 11, le coupleur 17 peut être simplifié et avoir la constitution de principe montrée en figure 3. Sur cette figure, deux coupleurs passifs 39 et 40 respectivement placés sur les lignes 10 et 11, permettent de dériver une fraction faible de l'énergie qui y circule. Dans la mesure où ils laissent passer la plus grande partie de l'énergie, il n'est pas nécessaire de prévoir la ré-émission, par des composants actifs, des données décodées. Les lignes ne sont donc pas interrompues. Le principe de la synchronisation reste identique à celui déjà décrit en faisant référence à la figure 2. Les données circulant sur les deux lignes sont décodées dans des décodeurs respectifs 23 et 27 à partir du signal fourni par un circuit XH 22. Un codeur 28, piloté par le signal d'horloge provenant du circuit 22, émet, sur la ligne 11, les données que lui présente le concentrateur 18 sur la ligne 30. Ces données sont insérées sur la ligne 11 par le coupleur directionnel 41, qui peut être physiquement confondu avec le coupleur 40.

A nouveau, le synchronisme de toutes les données circulant sur les lignes 10 et 11 est bien assuré. Toutefois, dans la configuration de la figure 3, la contrainte concernant la différence des temps de transit sur les deux lignes 10 et 11 est plus stricte, puisque la différence de temps doit être calculée pour un parcours sur toute la boucle et non pas entre deux stations successives.

La constitution schématiquement représentée en figure 3 peut notamment être utilisée lorsque le support est constitué par un guide diélectrique d'ondes optiques, et notamment par une fibre optique. La transmission lumineuse sur une fibre est en effet monodirectionnelle. Toutefois, la technologie actuelle de dérivation de lumière à partir d'une fibre optique ne permet pas de mettre en œuvre un nombre élevé (supérieur à 30 environ) de coupleurs sans adaptation des récepteurs optiques associés à chaque station. Lorsque le système doit comporter un grand nombre de stations, on sera donc amené à utiliser des coupleurs du genre montré en figure 1.

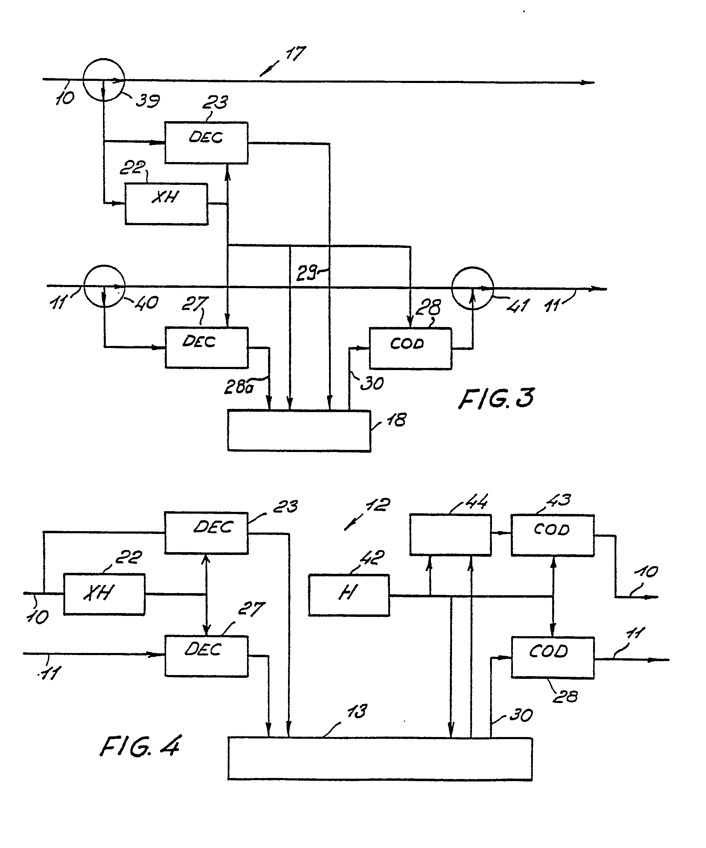

Un exemple de constitution de principe du coupleur 12 de la station maître 8 est donné en figure 4. Ce coupleur comporte une partie de réception qui peut être identique à celle des coupleurs 17. Cette partie ne sera donc pas décrite et ses composants sont désignés, sur la Figure 4, par les mêmes numéros de référence que sur les figures 2 et 3.

La partie émission comporte une horloge maître 42 qui est transmise sur la ligne 10 aux stations esclaves 9, à travers un codeur 43. Le signal d'horloge est transmis directement en dehors des périodes d'interrogation d'une station esclave, par un circuit d'émission continue 44 attaquant le codeur 43. Pendant les interrogations émises par la station maître, le signal d'horloge synchronise les codeurs d'émission 43 et 28. On voit que, même en l'absence d'information à émettre par la station maître, la ligne 10 est active et aucune perte de synchronisation n'est possible dans les stations esclaves 9. L'horloge 42 peut être d'une grande stabilité et minimise ainsi la dérive absolue de toutes les horloges du système. Le circuit 44 peut être prévu pour émettre toujours le même caractère binaire en périodes d'attente, le début d'une information utile pouvant dans ce cas être constitué systématiquement par le caractère binaire complémentaire.

On ne décrira pas ici l'unité de contrôle 13 de la station maître, car elle peut être de nature classique. Cette unité 13 constitue un petit calculateur frontal inséré entre le réseau de transmission et le calculateur 14.

Il remplit plusieurs tâches :

— il affecte l'usage de la ligne de données 11 à un concentrateur, en résolvant les conflits d'accès éventuels et vérifie que les capacités de stockage des mémoires des concentrateurs 18 ne sont pas dépassées,

— il contrôle la bonne marche du système,

— il met en forme les données reçues sur le réseau pour les rendre acceptables par le calculateur : ces données transitent par exemple sur la ligne 11 par trames et doivent être mise sous forme parallèle.

La procédure d'accès au réseau peut être la suivante : l'unité de contrôle 13 interroge successivement les différentes stations esclaves 9 suivant une séquence qui peut dépendre du volume de données attendu et aussi du caractère rapide ou lent des concentrateurs. En réponse, chaque concentrateur sollicite ou non une autorisation d'émission, suivant le degré d'encombrement de sa mémoire locale et des critères prédéterminés, par exemple le retard acceptable à la transmission des informations. En général, le concentrateur groupera les données à transmettre, les structurera en tableaux dans la mémoire locale et assurera un formatage approprié, par exemple suivant le modèle normalisé à haut niveau HDLC beaucoup plus économique qu'une transmission par mots.

Lorsqu'en réponse à un signal d'interrogation, une station esclave particulière envoie un signal indiquant qu'une information est à transmettre sur la ligne 11, l'unité de commande 13 envoie une autorisation à émettre et le concentrateur 18 approprié transmet sur tableaux. Puis la séquence se poursuit. Un tel mode d'allocation dynamique de la ligne 11 présente l'avantage d'une grande souplesse quant à la structure de l'installation, à laquelle peuvent aisément être ajoutées des stations esclaves supplémentaires.

L'invention permet en conséquence de réaliser de façon simple une installation à grand débit et on peut indiquer à titre d'exemple que les performances suivantes ont été atteintes, avec transmission sur fibre optique :

Débit brut : 10 Mbits/s
Précision de synchronisation : ± 100 ns.

**Revendications**

1. Procédé de transmission de données numériques sur un réseau comportant une ligne de transmission de données (11) et une ligne de commande et de synchronisation (10) reliant une station maître (8), seule capable d'émettre sur la ligne de commande (10), et plusieurs stations esclaves (9), caractérisé en ce qu'on fait circuler les informations en phase sur les deux lignes (10, 11) présentant la même configuration, on maintient en permanence l'émission de la station maître sur la ligne de commande (10) en envoyant sur la ligne de commande, un caractère d'élaboration des signaux de synchronisation entre les informations de commande, et à chaque station esclave, on extrait en permanence le signal d'horloge des informations circulant sur la ligne de commande.

2. Procédé selon la revendication 1, caractérisé en ce qu'on émet, à partir de la station maître, sur la ligne de commande, un même caractère binaire de façon répétitive pendant les périodes d'attente et en ce qu'on marque le début des interrogations par la station maître en émettant le caractère binaire complémentaire.

3. Procédé selon la revendication 1 ou 2, caractérisé en ce que le code utilisé pour les émissions sur la ligne de commande à partir de la station maître est choisi parmi ceux permettant de reconstituer un signal d'horloge à partir de messages codés.

4. Installation de transmission de données numériques sur un réseau comportant une ligne de transmission de données (11) et une ligne de commande et de synchronisation (10) reliant une station maître (8) seule capable d'émettre sur la ligne de commande (10) et plusieurs stations esclaves (9) pouvant recevoir et émettre sur la ligne de transmission, caractérisée en ce que, les lignes (10, 11) étant unidirectionnelles, présentant sensiblement le même temps de transit et étant bouclées sur la station maître, ladite station maître est prévue pour émettre, sur la ligne de commande des informations de commande séparées par des caractères d'élaboration de signaux de synchronisation de façon que l'émission soit permanente, et chaque station esclave comporte des moyens pour extraire une information d'horloge du signal permanent sur la ligne de commande et émettre des informations en phase avec le signal d'horloge.

5. Installation selon la revendication 4, caractérisée en ce que la ligne de transmission de données (11) au moins est constituée par un support physique qui est interrompu en chaque station (8, 9).

6. Installation selon la revendication 4, caractérisée en ce que la ligne de transmission de données (11) au moins est non diffusante et en ce que les stations esclaves sont connectées à la ligne par des coupleurs passifs (39, 40, 41).

7. Installation selon l'une quelconque des revendications 4 à 6, caractérisée en ce que chaque station esclave (9) comporte, reliés à la ligne de commande (10), un circuit d'extraction d'horloge, fournissant en permanence un signal de synchronisation à un concentrateur (18) de traitement des données à transmettre, et un décodeur (23) d'envoi au concentrateur des commandes provenant de la station maître et destinées à ladite station esclave, et comporte un décodeur (27) et un codeur (28) de couplage avec la ligne de données (11), synchronisés par le signal provenant du circuit d'extraction d'horloge (22).

8. Installation selon l'une· quelconque des revendications 4 à 7, caractérisée en ce que les lignes sont prévues de façon que la différence de temps de parcours des informations sur les deux lignes entre les deux stations où elles sont régénérées est inférieure au quart de la durée du plus court des états stables d'un bit d'information après codage.

## Claims

1. A process for transmitting digital data over a network, comprising a data transmission line (11) and a control and synchronizing line (10) connecting a master station (8), alone capable of transmitting over the control line (10) and several slave stations (9), characterized in that ·the information is caused to flow in phase over the two lines (10, 11) having a same configuration ; transmission by the master station over the control line (10) is continuously maintained by sending, over the control line, a character for elaborating the sync signals between the control information ; and at each slave station the clock signal is continuously extracted from the information flowing over the control line.

2. Process according to claim 1, characterized in that the same binary character is repetitively transmitted from the master station over the control line during the idle periods and in that the beginning of interrogations by the master station is marked by transmitting the complementary binary character.

3. Process according to claim 1 or 2, characterized in that the code used for transmission over the control line from the master station is selected from those allowing a clock signal to be reconstituted from coded messages.

4. Installation for transmitting digital data over a network, comprising a data transmission line (11) and a control and synchronizing line (10) connecting together the master station (8), alone capable of transmitting over the control line (10), and a plurality of slave stations (9) capable of receiving and transmitting over the transmission line, characterized in that, the lines (10, 11) being unidirectional, having substantially the same transit time and being looped back to the master station, said master station is provided for transmitting, over the control line, control information separated by sync signal generation characters so that the transmission is continuous, and each slave station comprises means for extracting clock information from the continuous signal on the control line and transmitting information in phase with the clock signal.

5. Installation according to claim 4, characterized in that the data transmission line (11) at least is formed by a physical support medium which is interrupted at each station (8, 9).

6. Installation according to claim 4, characterized in that the data transmission line (11) at least is non diffusing and in that the slave stations are connected to the line by passive couplers (39, 40, 41).

7. Installation according to any one of claims 4 to 6, characterized in that each slave station (9) comprises, connected to the control line (10), a clock extraction circuit continuously supplying a synchronizing signal to a concentrator (18) for processing data to be transmitted, and a decoder (23) for sending to the concentrator instructions from the master station and intended for said slave station, and comprises a decoder (27) and an encoder (28) for coupling with the data line (11), synchronized by the signal from the clock extraction circuit (22).

8. Installation according to any one of claims 4 to 7, characterized in that the lines are provided so that the difference in transit time of the information over the two lines between the two stations where they are regenerated is less than a quarter of the duration of the shortest of the stable states of an information bit after encoding.

## Patentansprüche

1. Verfahren zur Übertragung von digitalen Daten über ein eine Datenübertragungsleitung (11) und eine Befehls- und Synchronisationsleitung (10) aufweisendes Netz, das eine lediglich auf die Befehlsleitung (10) sendende Haupstation (8) und mehrere Nebenstationen (9) verbindet, dadurch gekennzeichnet, daß die Informationen in Phase auf den beiden, die gleiche Konfiguration bildenden Leitungen (10, 11) zur Zirkulation gebracht werden, daß die Aussendung von der Haupstation auf die Befehlsleitung (10) dauernd aufrechterhalten wird, indem zwischen den Befehlsinformationen ein Verarbeitungszeichen der Synchronisationssignale auf die Befehlsleitung gesendet wird, und daß das Taktsignal dauernd aus den auf der Befehlsleitung zirkulierenden Informationen abgetrennt wird.

2. Verfahren nach Anspruch 1, dadurch gekennzeichnet, daß von der Hauptstation auf die Befehlsleitung wiederholt während der Warteperioden ein Binärzeichen gesendet wird und daß durch Senden des komplementären Binärzeichens der Beginn der Abtragungen durch die Hauptstation markiert wird.

3. Verfahren nach Anspruch 1 oder 2, dadurch gekennzeichnet, daß der für das Aussenden auf die Befehlsleitung von der Hauptstation verwendete Code aus solchen Codes ausgewählt wird, die die Rückbildung eines Taktsignals aus den codierten Informationen ermöglichen.

4. Einrichtung zur Übertragung von digitalen Daten über ein eine Datenübertragungsleitung (11) und eine Befehls- und Synchronisationsleitung (10) aufweisendes Netz, das eine lediglich auf die Befehlsleitung (10) sendende Hauptstation (8) und mehrere von der Übertragungsleitung empfangende und auf diese sendende Nebenstationen verbindet, dadurch gekennzeichnet, daß die Leitungen (10, 11) unidirektionale Leitungen mit genau gleicher Laufzeit sind, die auf die Hauptstation geschleift sind, daß die Hauptstation zur permanenten Aussendung von Befehlsinformationen auf die Befehlsleitung dient, die Verarbeitungssynchronisationssignale getrennt sind, und daß jede Nebenstation eine Anordnung zur Abtrennung einer permanenten Taktinformation auf der Befehlsleitung sowie zur Aussendung von Informationen in Phase mit dem Taktsignal aufweist.

5. Einrichtung nach Anspruch 4, dadurch gekennzeichnet, daß die Datenübertragungsleitung (11) wenigstens durch einen physikalischen Träger gebildet ist, der in jeder Station (8, 9) unterbrochen ist.

6. Einrichtung nach Anspruch 4, dadurch gekennzeichnet, daß die Datenübertragungsleitung (11) nicht streuend ist und daß die Nebenstationen durch passive Koppelanordnungen (39, 40, 41) mit der Leitung verbunden sind.

7. Einrichtung nach den Ansprüchen 4 bis 6, dadurch gekennzeichnet, daß jede Nebenstation (9) eine mit der Befehlsleitung verbundene Schaltung zur Abtrennung eines Zeittaktes, welche dauernd ein Synchronisationssignal für eine Datenverarbeitungsanordnung (18) liefert, einen Sendedecodierer in der Verarbeitungsanordnung für von der Hauptstation kommende und der Nebenstation zugeordnete Befehle sowie einen Decodierer (27) und einen Codierer (28) aufweist, die mit der Datenleitung (11) gekoppelt und durch das von der Taktabtrennschaltung (22) kommende Signal synchronisiert sind.

8. Einrichtung nach den Ansprüchen 4 bis 7, dadurch gekennzeichnet, daß die Leitungen derart ausgebildet sind, daß die Differenz der Informationslaufzeit auf den zwei Leitungen zwischen den zwei Stationen, wo eine Regeneration erfolgt, kleiner als ein Viertel der kürzesten Dauer von stabilen Zuständen eines Informationsbits nach Codierung ist.

FIG.2

FIG.1

FIG.3

FIG.4